# EUROPEAN PATENT APPLICATION

(11) **EP 2 922 115 A1**
(43) Date of publication of application: **23.09.2015**
(21) Application number: 15157547.9
(22) Date of filing: 04.03.2015
(51) Int. Cl.: H01M 2/16, H01M 2/18, H01M 4/13, H01M 10/04, H01M 10/0525, H01M 10/0587, H01M 2/14, H01M 4/1393

(54) **Battery**

(30) Priority: 18.03.2014 JP 2014054697
(71) Applicant: Kabushiki Kaisha Toshiba, Tokyo 105-8001 (JP)
(72) Inventor: Uematsu, Ikuo, Tokyo, 105-8001 (JP); Hayamizu, Naoya, Tokyo, 105-8001 (JP)
(74) Representative: Hoffmann Eitle

(57) **Abstract**

According to an embodiment, a battery (10) includes a positive electrode (40), a negative electrode (50), a separator (60), and a filler portion (70). The separator (60) is provided between the positive electrode (40) and the negative electrode (50), and does not allow the passage of electrons and allows the passage of ions. The filler portion (70) fills a depression (71) provided in a positive electrode active material layer (42) of the positive electrode (40) or a negative electrode active material layer (52) of the negative electrode (50), and does not allow the passage of electrons and allows the passage of ions.

## Description

### FIELD

Embodiments described herein relate generally to a battery in which a separator is provided between a positive electrode and a negative electrode and a combination of these components is stored in a container in a rolled state.

### BACKGROUND

For example, a lithium ion secondary battery has a positive electrode, a negative electrode, and a separator which is provided between the positive electrode and the negative electrode to avoid contact between the positive electrode and the negative electrode. The positive electrode, the negative electrode, and the separator are stacked on one another and rolled to form an electrode group, and stored in a container.

The separator has a property which does not allow the passage of electrons and allows the passage of ions. When the separator is made of a porous material, an electrolytic solution is stored in the container. Alternatively, when the separator is made of an electrolyte, no electrolytic solution is stored in the container. Therefore, ions can be exchanged between the positive electrode and the negative electrode via the separator.

The positive electrode and the negative electrode each have a collector made of a metallic material such as aluminum as the main material, and an active material layer stacked on the collector. The active material layer is formed by using coating means such as a nozzle to coat the collector with an active material that constitutes the active material layer.

During the formation of the active material layer, part of the surface of the active material layer may be depressed, so that the surface of the active material layer may not be flat.

As a result of a thickness reduction of the active material layer caused by the depression, a potential difference relative to the positive electrode and the negative electrode is made between a part of the collector facing the depression and other parts, so that concentration of an electric field occurs. The concentration of the electric field also occurs if the distance between the separator and the active material layer is reduced by the entry of the separator into the depression. Thus, the positive electrode or the negative electrode that is depressed is disposed of, and a yield deteriorates accordingly.

Therefore, there has been suggested a technique to fill the depression with a correcting paste having no active material and no conductive auxiliary agent so that the surface of the active material layer may be flat.

### BRIEF DESCRIPTION OF THE DRAWINGS

FIG. 1 is a perspective view showing a battery according to a first embodiment;
FIG. 2 is a sectional view of the same battery taken along the line F2-F2 in FIG. 1;
FIG. 3 is a sectional view of an electrode group taken along the line F3-F3 in FIG. 2;
FIG. 4 is a sectional view of the same battery showing another example of a filled depression; and
FIG. 5 is a sectional view showing a battery according to a second embodiment.

### DETAILED DESCRIPTION

According to an embodiment, a battery includes a positive electrode, a negative electrode, a separator, and a filler portion. The positive electrode includes a positive electrode collector, and a positive electrode active material layer provided on the positive electrode collector. The negative electrode includes a negative electrode collector, and a negative electrode active material layer provided on the negative electrode collector. The separator is provided between the positive electrode and the negative electrode, and does not allow the passage of electrons and allows the passage of ions. The filler portion fills a depression provided in the positive electrode active material layer or the negative electrode active material layer, and does not allow the passage of electrons and allows the passage of ions.

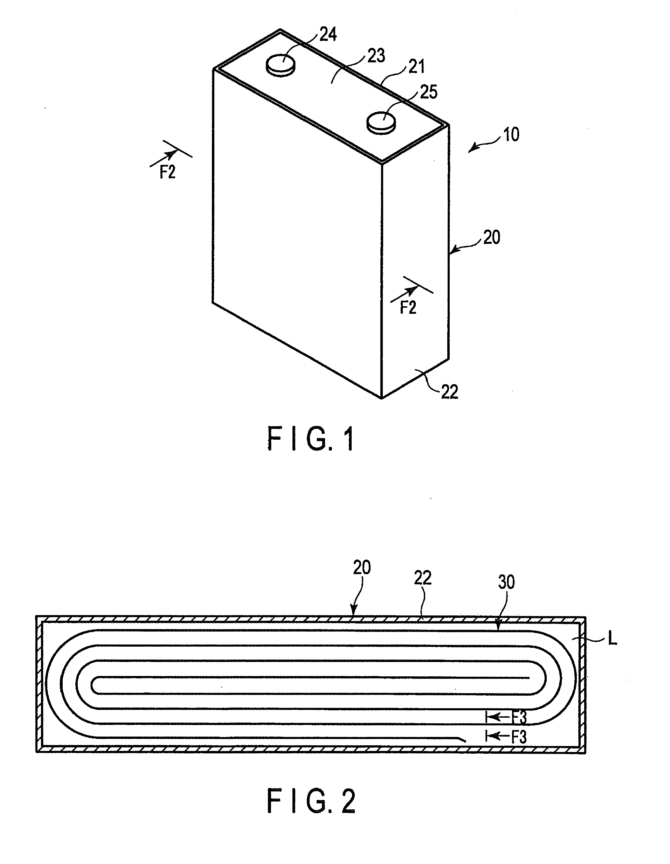

A battery according to a first embodiment is described with reference to FIGS. 1, 2, and 3. A battery 10 is a secondary battery by way of example in the present embodiment. FIG. 1 is a perspective view showing the battery 10. FIG. 2 is a sectional view of the battery 10 taken along the line F2-F2 in FIG. 1. As shown in FIGS. 1 and 2, the battery 10 has a container 20, an electrode group 30 stored in the container 20, and an electrolytic solution L.

The container 20 has a bottomed container body 22 having an opening 21 at one end, and a sealing plate 23 which blocks the opening 21 of the container body 22. A positive electrode terminal 24 and a negative electrode terminal 25 are provided on the upper surface of the sealing plate 23.

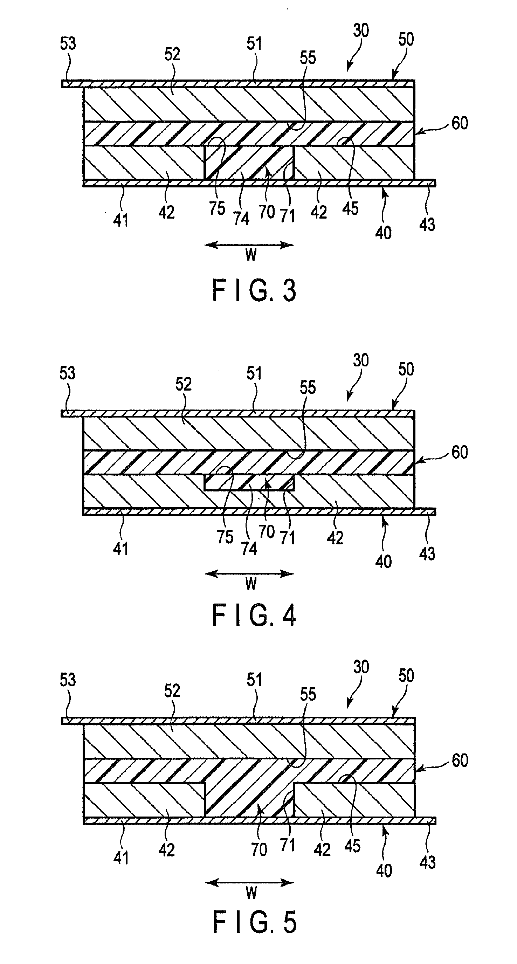

FIG. 3 is a sectional view of the electrode group 30 taken along the line F3-F3 in FIG. 2. As shown in FIG. 3, the electrode group 30 has a positive electrode 40, a negative electrode 50, a separator 60 provided between the positive electrode 40 and the negative electrode 50, and a filler portion 70 (depression). As shown in FIGS. 2 and 3, the electrode group 30 is formed by a combination of the positive electrode 40, the negative electrode 50, and the separator 60 that are stacked on one another and rolled in its longitudinal direction. FIG. 3 shows this combination cut perpendicularly to the longitudinal direction thereof.

The positive electrode 40 has a positive electrode collector 41 made of, for example, aluminum as the main material, and a positive electrode active material layer 42 provided on the positive electrode collector 41. The positive electrode collector 41 is plate-shaped and flexible. The positive electrode active material layer 42 is formed in a part of the positive electrode collector 41 except for one end 43 in a width direction W. The width direction W is a direction perpendicular to the longitudinal direction of the positive electrode 40. The positive electrode active material layer 42 is flexible. The positive electrode collector 41 is exposed at one end 43 of the positive electrode collector 41 where the positive electrode active material layer 42 is not formed.

The negative electrode 50 has a negative electrode collector 51 made of, for example, aluminum as the main material, and a negative electrode active material layer 52 provided on the negative electrode collector 51. The negative electrode collector 51 is plate-shaped and flexible. The negative electrode active material layer 52 is formed in a part of the negative electrode collector 51 except for one end 53 in the width direction W. The negative electrode active material layer 52 is flexible. The negative electrode collector 51 is exposed at one end 53 of the negative electrode collector 51 where the negative electrode active material layer 52 is not formed.

The positive electrode 40 and the negative electrode 50 are arranged in such a manner that the positive electrode active material layer 42 and the negative electrode active material layer 52 face each other and that the ends 43 and 53 where the collectors 41 and 51 are exposed are opposite to each other in the width direction W.

The separator 60 is provided between the positive electrode active material layer 42 and the negative electrode active material layer 52. Specifically, the separator 60 is stacked on the positive electrode active material layer 42. The negative electrode active material layer 52 is stacked on the separator 60. The separator 60 is made of, for example, a porous resin material. The separator 60 is porous and thus has the property that does not allow the passage of electrons and allows the passage of ions. The separator 60 is flexible.

The filler portion 70 fills a filled depression 71 formed in a surface 45 of the positive electrode active material layer 42 or a surface 55 of the negative electrode active material layer 52, and is formed to be able to fill a gap defined between the filled depression 71 and the separator 60.

A filling material 74 that constitutes the filler portion 70 is made of a material that does not allow the passage of electrons and allows the passage of ions. Therefore, the filler portion 70 has the property that does not allow the passage of electrons and allows the passage of ions. Even if the filling material 74 does not have the property that does not allow the passage of electrons and allows the passage of ions, the filler portion 70 has only to have the property that does not allow the passage of electrons and allows the passage of ions when the filler portion 70 is formed. In the present embodiment, the filling material 74 is made of, for example, the same material as the separator 60. For example, the filling material 74 can include at least one kind selected from the group consisting of an organic porous material, an inorganic porous material, an organic fiber, and inorganic particles.

Organic matter constituting the organic porous material or the organic fiber can include at least one kind selected from the group consisting of polyamide-imide, polyamide, polyimide, polyvinylidene fluoride, cellulose, polyolefin, polyether, polyketone, polysulfone, polypropylene, and polyvinylalcohol.

The inorganic particles can include at least one kind selected from the group consisting of alumina, silica, titania, zirconia, and ceria.

In the present embodiment, by way of example, the filled depression 71 is formed in a part of the positive electrode active material layer 42 as shown in FIG. 3. Here, the filled depression 71 that is provided in the positive electrode 40 is described by way of example. The filled depression 71 has a shape which pierces from the surface 45 of the positive electrode active material layer 42 to the positive electrode collector 41 as shown in FIG. 3, or a shape which is depressed from the surface 45 of the positive electrode active material layer 42 to a position that does not reach the positive electrode collector 41 as shown in FIG. 4. FIG. 4 is a sectional view showing the electrode group 30 cut in a similar manner to FIG. 3. While the positive electrode 40 is used to describe the filled depression 71, the same holds true with the negative electrode 50.

Depressions different in size may be formed in the surface 45 of the positive electrode active material layer 42 and the surface 55 of the negative electrode active material layer 52 in the manufacturing process of the battery 10. In the present embodiment, the filled depression 71 is at least one of the above depressions of a size equal to or more than a size that influences a quality of the battery 10.

For example, a depression in which the size of an opening in the width direction W or the longitudinal direction is equal to or more than the largest one of the particle diameter of the active material that constitutes the active material layer 42 or 52, the particle diameter of a conductive agent, and the particle diameter of a binder may be set as the filled depression 71.

Alternatively, a depression in which the size of the opening in the width direction or the longitudinal direction is larger than the particle diameter of one of the active material, the conductive agent, and the binder contained in the active material layer at the highest ratio may be set as the filled depression 71.

Alternatively, a depression may be set on the basis of the thickness of the collectors 41 and 51. In this case, for example, a depression having a depth which is equal to or more than 20 percent of the thickness of the collectors 41 and 51 may be set as the filled depression 71.

Alternatively, a depression having a length in the longitudinal direction greater than a preset given length may be set as the filled depression 71. Alternatively, when the separator 60 is formed by the use of nonwoven fabric, a depression in which the size of the opening in the width direction W is larger than the diameter of the fiber may be set as the filled depression 71. Alternatively, one of the depressions that satisfies some of the above-mentioned conditions may be set as the filled depression 71.

In the present embodiment, a depression that can be visually recognized by an operator is set as the filled depression 71. This condition is based on the fact that a depression having a size that cannot be visually recognized does not affect the quality required for the battery 10 according to the present embodiment. This condition is one example used in the present embodiment. For example, for a desired quality, a depression having a size that cannot be visually recognized may be set as the filled depression. In this case, the depression can be recognized by the use of an inspection apparatus such as a microscope.

A manufacturing method of the battery 10 is described now by way of example. First, the positive electrode active material layer 42 is formed by coating the positive electrode collector 41 with an active material. After the positive electrode 40 is formed, whether the filled depression 71 is formed is then visually recognized. When the filled depression 71 is not formed, the negative electrode 50 is then formed.

When the filled depression 71 is formed, the filled depression 71 is filled with the filling material 74 to form the filler portion 70. The amount of the filling material 74 filled is such that a surface 75 of the filler portion 70 is flush with the surface 45 of the positive electrode active material layer 42.

The filled depression 71 may be manually filled with the filling material 74, for example, by the operator. Alternatively, the filled depression 71 may be filled with the nonwoven fabric as the filling material 74 by an electro-spinning method. When the filled depression 71 is filled with the nonwoven fabric by the electro-spinning method, the material that constitutes the nonwoven fabric is discharged from a nozzle for discharging this material by adjusting the potential at the position of the filled depression 71, so that the filled depression 71 can be automatically filled with the filling material 74.

Alternatively, the filled depression 71 may be filled with the filling material 74 by an inkjet method. Alternatively, the filled depression 71 may be filled with the filling material 74 by a jet dispenser method. Thus, how to fill the filled depression 71 with the filling material is not limited. The filled depression 71 is filled by the formation of the filler portion 70, so that the surface 45 of the positive electrode active material layer 42 will be flat.

After the filler portion 70 is formed, the negative electrode 50 is then formed. When the filled depression 71 is not formed, the negative electrode 50 is formed after the positive electrode 40 is formed. The negative electrode 50 is formed in the same manner as the positive electrode 40, and is therefore not described. The order of formation of the positive electrode 40 and the negative electrode 50 is not limited.

The separator 60 is then formed on the positive electrode 40. After the separator 60 is formed, the negative electrode 50 is stacked on the separator 60 so that the negative electrode active material layer 52 is stacked on the separator 60 as shown in FIGS. 3 and 4.

A combination of the positive electrode 40, the separator 60, and the negative electrode 50 is then rolled to form the electrode group 30. The electrode group 30 is then stored in the container body 22. The opening 21 of the container body 22 is then blocked with the sealing plate 23. In this instance, one end 43 of the positive electrode 40 where the positive electrode collector 41 is exposed is electrically connected to the positive electrode terminal 24 by a connection structure such as a connecting wire. One end 53 of the negative electrode 50 where the negative electrode collector 51 is exposed is also electrically connected to the negative electrode terminal 25 by a connection structure such as a connecting wire.

In the battery 10 having such a configuration, concentration of an electric field is prevented by the filler portion 70 that fills the filled depression 71. This is concretely described. By the formation of the filled depression 71, a potential difference relative to the negative electrode 50 is made between the part of the positive electrode collector 41 facing the filled depression 71 and other parts. However, by filling the filled depression 71 with the filler portion 70, it is possible to reduce the potential difference relative to the negative electrode 50 between the part of the positive electrode collector 41 facing the filled depression 71 and other parts. Thus, the concentration of the electric field can be prevented. The same holds true in the case where the filled depression 71 is formed in the negative electrode 50.

Thus, the concentration of the electric field can be prevented by the formation of the filler portion 70. Therefore, the positive electrode 40 or the negative electrode 50 in which the filled depression 71 is formed can be used without being disposed of, so that the yield of the material can be improved.

The filler portion 70 has the property that does not allow the passage of electrons and allows the passage of ions, so that ions can be exchanged between the positive electrode 40 and the negative electrode 50 through the filled depression 71. Thus, deterioration in the performance of the battery can be prevented.

As described above, according to the battery in the present embodiment, it is possible to improve the yield and prevent performance deterioration.

Moreover, the filler portion 70 is provided, so that deterioration of manufacturing efficiency can be prevented in the battery 10 including the electrode group 30 which is formed by rolling the combination of the positive electrode 40, the separator 60, and the negative electrode 50 as in the present embodiment. This is concretely described.

When the filled depression 71 is not filled with the filler portion 70, a gap is formed between the filled depression 71 and the separator 60 if the positive electrode 40, the separator 60, and the negative electrode 50 are stacked on one another. If this combination is rolled in this state, the separator 60 enters the gap during the rolling. As a result, the parts of the collectors 41 and 51 facing the filled depression 71 are pressed by the separator 60 that has entered, and thus project outward and form a projection.

This projection tends to increase in size in accordance with the number of times the combination of the positive electrode 40, the separator 60, and the negative electrode 50 is wound. When the projection is larger, it is more difficult to store the electrode group 30 in the container 20.

However, in the present embodiment, the filled depression 71 is filled with the filler portion 70, so that when the combination of the positive electrode 40, the separator 60, and the negative electrode 50 is rolled, the formation of the projection is prevented. Thus, it is not difficult to store the electrode group 30 in the container 20, and deterioration of the manufacturing efficiency of the battery 10 can therefore be prevented.

In the first embodiment, the filling material 74 is the same as the material constituting the separator 60 by way of example. In another example, the filler portion 70 may be made of a material different from the material constituting the separator 60. The filler portion 70 has only to have the property that does not allow the passage of electrons and allows the passage of ions.

Now, a battery according to a second embodiment is described with reference to FIG. 5. Components having functions similar to those in the first embodiment are denoted with the same reference signs in the first embodiment and are not described. In the present embodiment, the separator 60 and the filler portion 70 are different in structure from those in the first embodiment. Other structures are the same as those in the first embodiment. The differences are concretely described.

FIG. 5 is a sectional view showing the electrode group 30 according to the present embodiment in the same manner as FIGS. 3 and 4. As shown in FIG. 5, in the present embodiment, the filler portion 70 is integrated with the separator 60.

According to the present embodiment, advantageous effects similar to those in the first embodiment can be provided. Moreover, since the filler portion 70 and the separator 60 can be integrally formed, the battery 10 can be more efficiently formed.

For example, if the separator 60 is formed by the electro-spinning method while the filled depression 71 is exposed without the formation of the filler portion 70 after the formation of the positive electrode 40, the filled depression 71 is selectively filled with fiber formed by the electro-spinning method by a potential difference between the filled depression 71 and parts other than the filled depression 71 in the active material layer 42. If the filler portion 70 is formed in the filled depression 71, the active material layer 42 is entirely coated with nonwoven fabric, and the separator 60 is formed. Thus, the separator 60 and the filler portion 70 can be integrally formed automatically by the use of the electro-spinning method.

In the first and second embodiments, the battery 10 has the electrolytic solution L. In another example, the separator 60 and the filler portion 70 may be each made of an electrolyte.

While certain embodiments have been described, these embodiments have been presented by way of example only, and are not intended to limit the scope of the inventions. Indeed, the novel embodiments described herein may be embodied in variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A battery **characterized by** comprising:
a positive electrode (40) which comprises a positive electrode collector (41), and a positive electrode active material layer (42) provided on the positive electrode collector (41);
a negative electrode (50) which comprises a negative electrode collector (51), and a negative electrode active material layer (52) provided on the negative electrode collector (51);
a separator (60) which is provided between the positive electrode (40) and the negative electrode (50) and which does not allow the passage of electrons and allows the passage of ions, and
a filler portion (70) which fills a depression (71) provided in the positive electrode active material layer (42) or the negative electrode active material layer (52) and which does not allow the passage of electrons and allows the passage of ions.

2. The battery according to claim 1, **characterized in that** the separator (60) and the filler portion (70) are integrally formed.

3. The battery according to claim 1, **characterized in that** the filler portion (70) includes at least one kind selected from the group consisting of an organic porous material, an inorganic porous material, an organic fiber, and inorganic particles.

4. The battery according to claim 2, **characterized in that** the filler portion (70) includes at least one kind selected from the group consisting of an organic porous material, an inorganic porous material, an organic fiber, and inorganic particles.

5. The battery according to claim 3, **characterized in that** organic matter constituting the organic porous material or the organic fiber includes at least one kind selected from the group consisting of polyamide-imide, polyamide, polyimide, polyvinylidene fluoride, cellulose, polyolefin, polyether, polyketone, polysulfone, polypropylene, and polyvinylalcohol.

6. The battery according to claim 4, **characterized in that** organic matter constituting the organic porous material or the organic fiber includes at least one kind selected from the group consisting of polyamide-imide, polyamide, polyimide, polyvinylidene fluoride, cellulose, polyolefin, polyether, polyketone, polysulfone, polypropylene, and polyvinylalcohol.

7. The battery according to claim 3, **characterized in that** the inorganic particles include at least one kind selected from the group consisting of alumina, silica, titania, zirconia, and ceria.

8. The battery according to claim 4, **characterized in that** the inorganic particles include at least one kind selected from the group consisting of alumina, silica, titania, zirconia, and ceria.
